# EUROPÄISCHE PATENTSCHRIFT

(11) **EP 3 261 749 B1**
(45) Veröffentlichungstag und Bekanntmachung des Hinweises auf die Patenterteilung: **07.08.2019**
(21) Anmeldenummer: 16706522.6
(22) Anmeldetag: 11.02.2016
(51) Int. Cl.: B01D 53/04, B01D 53/26, F15B 21/04, B60T 17/00

(54) **VERFAHREN FÜR DEN BETRIEB EINES LUFTTROCKNERS FÜR EINE DRUCKLUFTANLAGE UND LUFTTROCKNER ZUR DURCHFÜHRUNG DES VERFAHRENS**
METHOD FOR THE OPERATION OF AN AIR DRYER FOR A COMPRESSED-AIR SYSTEM AND AIR DRYER FOR PERFORMING THE METHOD
PROCÉDÉ PERMETTANT DE FAIRE FONCTIONNER UN DESSICATEUR D'AIR POUR UNE INSTALLATION À AIR COMPRIMÉ ET DESSICATEUR D'AIR POUR LA MISE EN OEUVRE DUDIT PROCÉDÉ

(30) Priorität: 28.02.2015 DE 102015002600
(43) Veröffentlichungstag der Anmeldung: 03.01.2018
(73) Patentinhaber: WABCO Europe BVBA, 1170 Brussels (BE)
(72) Erfinder: HANSEN, Yves, 31224 Peine (DE); KOPCIUCH, Wojciech, 58-330 Jedlina-Zdroj (PL)
(74) Vertreter: Copi, Joachim
(86) Internationale Anmeldenummer: PCT/EP2016/000229
(87) Internationale Veröffentlichungsnummer: WO 2016/134826

(56) Entgegenhaltungen:
- DE-A1-102010 011 571
- US-A- 5 286 283
- US-B1- 6 283 725
- US-B2- 7 544 234

## Beschreibung

Die Erfindung betrifft ein Verfahren für den Betrieb eines Lufttrockners gemäß dem Oberbegriff des Anspruchs 1 und einen Lufttrockner gemäß dem Oberbegriff des Anspruchs 2.

Bei Druckluftanlagen, beispielsweise für die Druckluftversorgung von Kraftfahrzeugen, wird die von einem Kompressor oder gegebenenfalls von einer anderen externen Druckluftquelle gelieferte, im Allgemeinen mit Feuchtigkeit und Verunreinigungen belastete Druckluft aufbereitet. Bei dieser Aufbereitung wird die in einer als Lufttrockner bezeichneten Einrichtung mit Hilfe eines Lufttrocknungsmittels sowie mittels Filter und Abscheider von Feuchtigkeit sowie von weiteren Kondensaten und Partikeln befreit, um Beschädigungen beziehungsweise Funktionsbeeinträchtigungen der Druckluftverbraucher durch nicht aufbereitete Druckluft auszuschließen. Typische Lufttrockner verwenden ein in einer Trocknerkartusche enthaltenes Lufttrocknungsmittel, welches nach einer vorgegebenen Betriebszeit mittels aufbereiteter, in einem Regenerationsreservoir gespeicherter Regenerationsluft regeneriert wird, wie allgemein bekannt ist.

Im Fördermodus wird der Lufttrockner und damit die Trocknerkartusche in einer Förderrichtung durchströmt, wobei die Druckluft aufbereitet und ein Teil der aufbereiteten Druckluft beispielsweise in einem gesonderten Regenerationsreservoir gespeichert wird. Bei Bedarf wird vom Fördermodus in einen Regenerationsmodus umgeschaltet, wobei getrocknete Regenerationsluft aus dem Regenerationsreservoir oder aus dem Druckluftsystem entgegengesetzt zur Förderrichtung durch den Lufttrockner und damit durch die Trocknerkartusche geleitet, sowie sodann zusammen mit im Lufttrockner angesammeltem Wasser und Verunreinigungen über das geöffnete Entlüftungsventil an die Atmosphäre abgegeben.

Ein Problem bei Druckluftanlagen vor allem im Winterbetrieb besteht darin, dass im Lufttrockner gesammeltes, noch nicht nach außen abgegebenes Wasser einfrieren kann, beispielsweise wenn ein Fahrzeug für längere Zeit abgestellt wird. Eine mögliche Folge davon ist, dass das Entlüftungsventil dadurch blockiert wird und sich nicht öffnen kann, so dass angesammeltes Wasser und Regenerationsluft nicht nach außen abgegeben sowie ein Regenerationsvorgang demnach nicht durchgeführt werden kann. Abhängig von der jeweiligen Außentemperatur kann es eine bestimmte Zeit dauern, bis vom Kompressor gelieferte warme Druckluft den Lufttrockner und insbesondere das Entlüftungsventil so weit erwärmt, dass dessen Funktionsfähigkeit wieder sichergestellt ist.

Eine Standardlösung für diesen Fall besteht darin, eine elektrische Heizeinrichtung im Bereich des Entlüftungsventils zu installieren, um eine Vereisung desselben zu verhindern oder aufzuheben. Die DE 10 2010 044 910 A1 offenbart eine Luftaufbereitungseinrichtung der gattungsgemäßen Art, bei der an einem als Lufttrocknergehäuse bezeichneten, dem Verteilergehäuse der vorliegenden Erfindung entsprechenden Bauteil ein gesonderter Heizungsanschluss vorgesehen ist, über den sich eine Heizung des Lufttrockners betreiben lässt. Mittels der Heizung kann durch ein in der Druckschrift nicht dargestelltes Ablassventil bei kalten Temperaturen derart vorgewärmt werden, dass sich keine Vereisung durch gefrierendes Kondensat ergibt. Der Heizungsanschluss kann gemäß einer ersten Ausgestaltung der bekannten Einrichtung ein elektrischer Anschluss zum Versorgen einer Heizung des Lufttrockners sein. Derartige Heizeinrichtungen erfordern jedoch einen verhältnismäßig hohen Kostenaufwand, und zwar einerseits wegen der Herstellungskosten der Heizeinrichtung selbst, andererseits wegen der erforderlichen konstruktiven und fertigungstechnischen Anpassung des Lufttrocknergehäuses an diese Heizeinrichtung, und schließlich wegen des zusätzlichen Montageaufwandes.

Die DE 10 2010 044 910 A1 erwähnt darüber hinaus beiläufig, dass über den Heizungsanschluss schon erwärmte Luft zugeführt werden kann. Da es sich bei dem Heizungsanschluss um einen gesonderten, neben dem Kompressoreingangsanschluss vorgesehenen Eingang handelt, muss man davon ausgehen, dass für die Bereitstellung erwärmter Luft eine gesonderte, nicht näher beschriebene Einrichtung vorgesehen sein soll, was in jedem Fall wiederum einen erheblichen konstruktiven Aufwand bedeutet und außerdem einen erheblichen Einbauraum erfordert.

Eine weitere gattungsgemäße Luftaufbereitungseinrichtung offenbart die DE102010011571. Darin wird der Betätigungskolben des Entlüftungsventils mit warmer Kompressorluft umspült.

Vor diesem Hintergrund liegt der Erfindung die Aufgabe zugrunde einen Lufttrockner gemäß dem Oberbegriff des Anspruches 1 vorzustellen, welcher es erlaubt, eine wirksame Beheizung des Entlüftungsventils bei geringstem konstruktiven und montagetechnischen Aufwand sowie ohne das Erfordernis zusätzlichen Einbauraum vorzusehen zur Verfügung zu stellen.

Die Lösung dieser Aufgabe ergibt sich aus den Merkmalen des Patentanspruches 1, während vorteilhafte Ausgestaltungen und Weiterbildungen der Erfindung den Unteransprüchen entnehmbar sind.

Der Erfindung liegt die Erkenntnis zugrunde, dass die vom Kompressor gelieferte Druckluft, die ohnehin dem Lufttrockner zugeführt wird, warm ist und damit die oben genannte Aufgabe übernehmen kann.

Beschrieben ist ein Verfahren für den Betrieb eines zwischen einem Druckluft-Kompressor oder dergleichen und einer Druckluftanlage angeordneten Lufttrockners mit einer Trocknerkartusche und einem Entlüftungsventil, die über ein zugeordnetes Verteilergehäuse miteinander in Verbindung stehen, wobei in einem Fördermodus vom Kompressor gelieferte Druckluft bei geschlossenem Entlüftungsventil über die Trocknerkartusche in die Druckluftanlage gefördert sowie in einem Regenerationsmodus in der Druckluftanlage gespeicherte Regenerationsluft über die Trocknerkartusche geleitet und über das geöffnete Entlüftungsventil in die Umgebung entlüftet wird. Zur Lösung der oben gestellten Aufgabe ist dabei vorgesehen, dass im Fördermodus die vom Kompressor gelieferte Druckluft über einen radial äußeren Bereich des Entlüftungsventils geleitet und von dort der Trocknerkartusche zugeführt wird. Im Fördermodus wird demnach die dem Verteilergehäuse ohnehin zugeführte, im Kompressor durch den Verdichtungsvorgang erwärmte Druckluft so über einen Einbaubereich des Entlüftungsventils geleitet, dass eine Vereisung desselben verhindert oder gegebenenfalls beseitigt wird. Eine gesonderte elektrische oder anders geartete Heizeinrichtung ist bei der Durchführung dieses Verfahrens nicht erforderlich.

Die Erfindung geht zur Lösung der vorrichtungsbezogenen Aufgabe aus von einem Lufttrockner für eine Druckluftanlage, aufweisend eine Trocknerkartusche und ein Entlüftungsventil, die über ein zugeordnetes Verteilergehäuse miteinander in Verbindung stehen, wobei das Verteilergehäuse einen ersten, mit einem Kompressor oder dergleichen verbindbaren Anschluss, mindestens einen zweiten, mit der Druckluftanlage verbindbaren Anschluss, sowie ferner ein internes Kanalsystem aufweist, über das in einem Fördermodus Druckluft vom ersten Anschluss über die Trocknerkartusche zum zweiten Anschluss geleitet sowie in einem Regenerationsmodus Regenerationsluft vom zweiten Anschluss über die Trocknerkartusche geleitet und über das geöffnete Entlüftungsventil in die Umgebung entlüftet wird. Zur Lösung der oben genannten Aufgabe ist dabei in konstruktiver Hinsicht vorgesehen, dass das interne Kanalsystem des Verteilergehäuses derart ausgebildet ist, dass im Fördermodus vom Kompressor gelieferte Druckluft vom ersten Anschluss über einen radial äußeren Bereich des Entlüftungsventils geleitet und von dort der Trocknerkartusche zugeführt wird.

Zur Verwirklichung der Erfindung muss daher grundsätzlich lediglich das interne Kanalsystem des Verteilergehäuses in der beschriebenen Weise verändert werden, ohne dass die äußeren Abmessungen des Verteilergehäuses einschließlich der externen Anschlüsse für die Anbindung an den Kompressor einerseits und die Druckluftanlage andererseits geändert werden müssen. Das bedeutet, dass das erfindungsgemäße Verteilergehäuse ohne weiteres und ohne jegliche konstruktive Anpassung seiner Umgebung bei bestehenden Druckluftanlagen nachgerüstet werden kann. Ein zusätzlicher Einbauraum, beispielsweise für eine elektrische oder andersartige Heizeinrichtung, muss darüber hinaus nicht vorgesehen werden.

Zusätzlich ist bei der Ausgestaltung der Erfindung vorgesehen, dass das interne Kanalsystem des Verteilergehäuses so ausgebildet ist, dass das im Verteilergehäuse angeordnete Ventilgehäuse des Entlüftungsventils radial außen von der Druckluft umspült wird. Auf diese Weise bedarf es auch keinerlei konstruktiver Änderung des Entlüftungsventils.

Die Erfindung umfasst gemäß einer anderen Weiterbildung auch die Möglichkeit, dass das interne Kanalsystem des Verteilergehäuses mit wenigstens einem Druckluftkanal in Verbindung steht, welcher durch Formgebung der radialen Außenfläche einer Wand des Ventilgehäuses des Entlüftungsventils ausgebildet ist. Alternativ oder ergänzend dazu kann vorgesehen sein, dass das interne Kanalsystem des Verteilergehäuses mit wenigstens einem Druckluftkanal in Verbindung steht, welcher in einer Wand des Ventilgehäuses des Entlüftungsventils ausgebildet ist. Hierbei kann vorgesehen sein, dass der in einer Wand des Ventilgehäuses des Entlüftungsventils ausgebildete Druckluftkanal durch eine nach radial außen offene Nut gebildet ist. Dem erhöhten konstruktiven Aufwand dieser Varianten steht dann eine weiter verbesserte Beheizung des Entlüftungsventils gegenüber.

Um einen Wärmeübergang vom inneren Bereich des Entlüftungsventils nach außen, beispielsweise an das Aluminiumgehäuse des Lufttrockners sowie an die Umgebung und damit eine Abkühlung des Entlüftungsventils möglichst gering zu halten, ist bei der Ausgestaltung der Erfindung vorgesehen, dass zumindest das Gehäuse des Entlüftungsventils aus einem Material mit einem geringen Wärmeleitvermögen gebildet ist. Als ein solches Material ist vorzugsweise ein Kunststoffmaterial vorgesehen, welches beispielsweise Polyethylen sein kann.

Durch die beschriebenen Maßnahmen, nämlich das Beheizen des Entlüftungsventils mittels vom Kompressor gelieferter warmer Druckluft und das Verhindern des Auskühlens des Entlüftungsventils durch Verwendung schlecht Wärme leitender Materialien kann die Temperatur des Entlüftungsventils lokal angehoben und ein Einfrieren der kritischen Bereiche des Entlüftungsventils verhindert werden, so dass ein Öffnen des Ventils bei Bedarf und damit eine Abgabe von Wasser sowie ein Durchführen des Regenerationsbetriebes jederzeit möglich ist.

Die Erfindung wird nachfolgend anhand eines Ausführungsbeispiels weiter erläutert. Dazu ist der Beschreibung eine Zeichnung beigefügt. In dieser zeigt
Fig. 1 eine perspektivische Schnittansicht eines Lufttrockners im Fördermodus, und
Fig. 2 in einer vergrößerten Schnittansicht ein Entlüftungsventil des Lufttrockners gemäß Fig. 1.

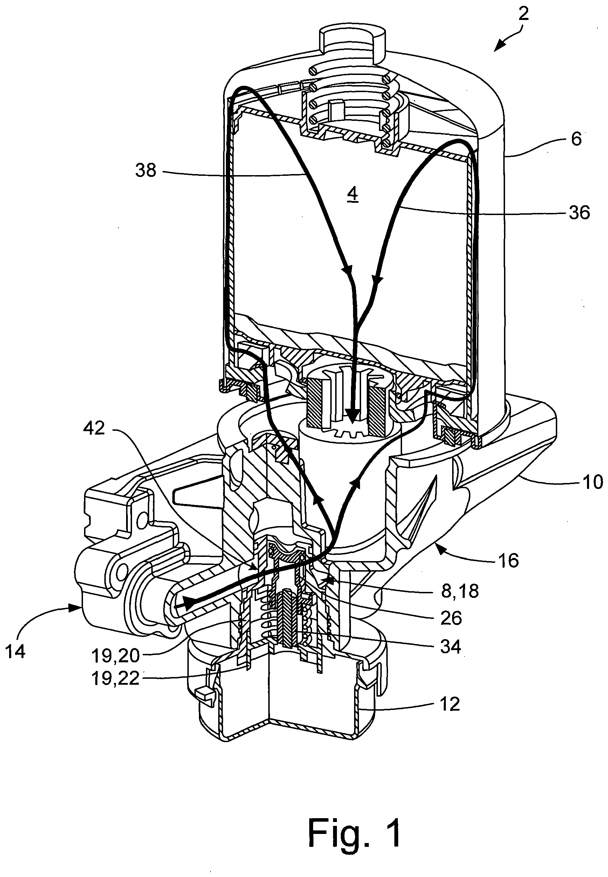

Der in der Fig. 1 dargestellte Lufttrockner 2 weist eine mit einem Trocknungsmittel 4 gefüllte Trocknerkartusche 6 und ein Entlüftungsventil 8 auf, die über ein zugeordnetes Verteilergehäuse 10 miteinander in Verbindung stehen. Am Ausgang des Entlüftungsventils 8 ist ein Schalldämpfer 12 angeordnet.

Das Verteilergehäuse 10 weist einen mit einem nicht dargestellten Kompressor oder dergleichen verbindbaren ersten Anschluss 14 und einen in der Zeichnung nicht sichtbaren, an der Unterseite des Verteilergehäuses 10 ausgebildeten, mit einer Druckluftanlage verbindbaren zweiten Anschluss 16 auf. Außerdem weist das Verteilergehäuse 10 ein internes Kanalsystem auf, über das in dem in der Fig. 1 durch lange Strömungspfeile 36, 38 dargestellten Fördermodus Druckluft vom ersten Anschluss 14 über die Trocknerkartusche 6 zum zweiten Anschluss 16 geleitet wird, über welchen die nicht dargestellte Druckluftanlage versorgt wird. Es sei an dieser Stelle bemerkt, dass grundsätzlich das interne Kanalsystem des Verteilergehäuses 10 schon Abzweigungen zu unterschiedlichen Druckluftverbrauchern aufweisen kann, so dass das Verteilergehäuse 10 mehrere mit der Druckluftanlage verbindbare Anschlüsse haben kann, wie hier nicht im einzelnen dargestellt ist.

Wie in Fig. 1 mit Hilfe der Strömungspfeile 36, 38 dargestellt ist, wird die vom Kompressor gelieferte, über den ersten Anschluss 14 in das Verteilergehäuse 10 eingespeiste warme Druckluft nicht wie bei herkömmlichen Lufttrocknern direkt zur Trocknerkartusche sondern über einen radial äußeren Bereich 18 des Entlüftungsventils 8 geleitet, welches auf diese Weise beheizt wird. Im dargestellten Ausführungsbeispiel ist das interne Kanalsystem so ausgebildet, dass ein mehrteiliges Ventilgehäuse 19 des Entlüftungsventils 8 im Bereich 18 eines Ventilkolbens 26 radial außen von der Druckluft umspült wird.

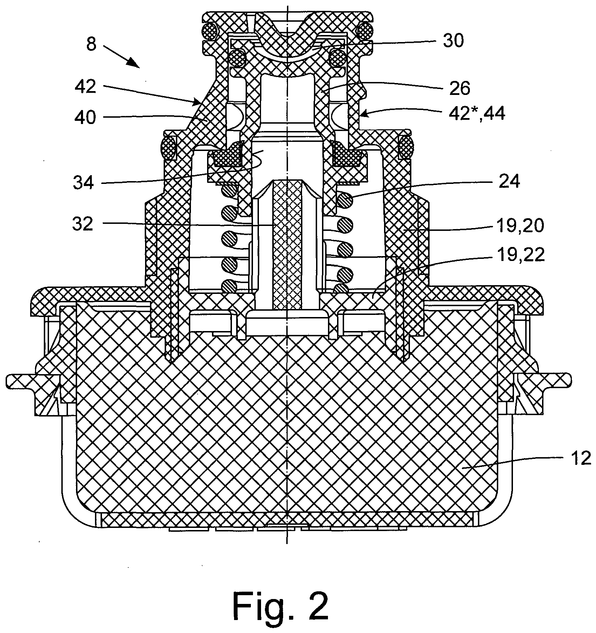

Fig. 2 zeigt die konstruktive Ausgestaltung des Entlüftungsventils 8 gemäß der Fig. 1 mit dem mehrteiligen Ventilgehäuse 19, einem in diesem Ventilgehäuse 19 axial gegen die Kraft einer zylindrischen Feder 24 verstellbaren Ventilkolben 26, und den am Ausgang des Entlüftungsventils 8 angeordneten Schalldämpfer 12. Das mehrteilige Ventilgehäuse 19 weist ein radial äußeres Gehäuseteil 20 und ein koaxial darin angeordnetes radial inneres Gehäuseteil 22 auf, die fest miteinander verbunden sind. Zentrisch und koaxial innerhalb der beiden Gehäuseteile 20, 22 ist ein zylindrischer Führungsschaft 32 angeordnet, der mit dem radial inneren Gehäuseteil 22 verbunden ist. Der Führungsschaft 32 ist radial innerhalb der zylindrischen Feder 24 angeordnet und greift führend in eine Sacklochbohrung 34 des topfförmigen Ventilkolbens 26 ein. Dieses Entlüftungsventil 8 wird pneumatisch über eine Steuerkammer 30 betätigt, wie allgemein bekannt ist.

Um einen Wärmeübergang vom Entlüftungsventil 8 zu dem üblicherweise aus Aluminium hergestellten Verteilergehäuse 10 des Lufttrockners 2 sowie zur Umgebung möglichst gering zu halten, sind zumindest das radial äußere Gehäuseteil 20 und das radial innere Gehäuseteil 22 des Entlüftungsventils 8 aus einem Kunststoffmaterial mit einer geringen Wärmeleitfähigkeit hergestellt. Auch der Führungsschaft 32 und der Ventilkolben 26 können aus dem gleichen Grund aus Kunststoff hergestellt sein. Dadurch verringert sich die Temperatur dieser Bauteile des Entlüftungsventils 8 bei niedrigen Umgebungstemperaturen ohne Erwärmung durch einen Kompressorbetrieb nur vergleichsweise langsam.

Wie insbesondere Fig. 1 zeigt, wird im dargestellten Ausführungsbeispiel das Entlüftungsventil 8 im schalldämpferfernen Bereich 18 des radial äußeren Gehäuseteils 20 des Ventilgehäuses 19 im Fördermodus von vom Kompressor gelieferter warmer Druckluft umspült. Zur Verbesserung der Umströmung des radial äußeren Gehäuseteils 20 des Ventilgehäuses 19 ist gemäß einem in der linken Zeichnungshälfte der Fig. 2 gezeigten Ausführungsbeispiel vorgesehen, dass das interne Kanalsystem des Verteilergehäuses 10 mit wenigstens einem Druckluftkanal 42 in Verbindung steht, welcher durch eine geeignete Formgebung der radialen Außenfläche einer Wand 40 des radial äußeren Gehäuseteils 20 des Entlüftungsventils 8 ausgebildet ist. Gemäß dem in der rechten Zeichnungshälfte der Fig. 2 gezeigten Ausführungsbeispiel ist vorgesehen, dass das interne Kanalsystem des Verteilergehäuses 10 mit wenigstens einem Druckluftkanal 42* in Verbindung steht, welcher in einer Wand 40 des radial äußeren Gehäuseteils 20 des Entlüftungsventils 8 ausgebildet ist. Dieser zuletzt genannte Druckluftkanal 42* kann in einer ausreichend dicken Gehäusewand 40 des radial äußeren Gehäuseteils 20 des Entlüftungsventils 8 beispielsweise durch die dargestellte, nach radial außen offene Nut 44 gebildet sein.

### Bezugszeichenliste (Teil der Beschreibung)

- 2: Lufttrockner
- 4: Trocknungsmittel
- 6: Trocknerkartusche
- 8: Entlüftungsventil
- 10: Verteilergehäuse
- 12: Schalldämpfer
- 14: Erster Anschluss
- 16: Zweiter Anschluss
- 18: Schalldämpferferner, radial äußerer Bereich des Entlüftungsventils
- 19: Ventilgehäuse des Entlüftungsventils
- 20: Radial äußerer Teil des Ventilgehäuses
- 22: Radial innerer Teil des Ventilgehäuses
- 24: Feder
- 26: Ventilkolben
- 30: Steuerkammer
- 32: Führungsschaft
- 34: Sacklochbohrung im Ventilkolben
- 36: Erster Strömungspfeil
- 38: Zweiter Strömungspfeil
- 40: Gehäusewand des Entlüftungsventils
- 42: Druckluftkanal an der Gehäusewand des Entlüftungsventils
- 42*: Druckluftkanal in der Gehäusewand des Entlüftungsventils
- 44: Nut in der Gehäusewand des Entlüftungsventils

## Patentansprüche

1. Lufttrockner (2) für eine Druckluftanlage, aufweisend eine Trocknerkartusche (6) und ein Entlüftungsventil (8), die über ein zugeordnetes Verteilergehäuse (10) miteinander in Verbindung stehen, wobei das Verteilergehäuse (10) einen ersten, mit einem Kompressor verbindbaren Anschluss (14) und wenigstens einen zweiten, mit der Druckluftanlage verbindbaren Anschluss (16) sowie ferner ein internes Kanalsystem aufweist, über das in einem Fördermodus Druckluft vom ersten Anschluss (14) über die Trocknerkartusche (6) zum zweiten Anschluss (16) geleitet sowie in einem Regenerationsmodus Regenerationsluft vom zweiten Anschluss (16) über die Trocknerkartusche (6) geleitet und über das geöffnete Entlüftungsventil (8) in die Umgebung entlüftet wird, **dadurch gekennzeichnet, dass** das interne Kanalsystem des Verteilergehäuses (10) derart ausgebildet ist, dass im Fördermodus vom Kompressor gelieferte Druckluft vom ersten Anschluss (14) über einen radial äußeren Bereich (18) des Entlüftungsventils (8) geleitet und von dort der Trocknerkartusche (6) zugeführt wird, wobei das interne Kanalsystem so ausgebildet ist, dass ein Ventilgehäuse (19) des Entlüftungsventils (8) radial außen von der Druckluft umspült wird, und wobei zumindest das Ventilgehäuse (19) des Entlüftungsventils (8) aus einem Kunststoffmaterial gebildet ist.

2. Lufttrockner nach Anspruch 1, **dadurch gekennzeichnet, dass** das interne Kanalsystem des Verteilergehäuses (10) mit wenigstens einem Druckluftkanal (42) in Verbindung steht, welcher durch Formgebung der radialen Außenfläche einer Wand (40) des Ventilgehäuses (19) des Entlüftungsventils (8) ausgebildet ist.

3. Lufttrockner nach Anspruch 1, **dadurch gekennzeichnet, dass** das interne Kanalsystem des Verteilergehäuses (10) mit wenigstens einem Druckluftkanal (42*) in Verbindung steht, welcher in einer Wand (40) des Ventilgehäuses (19) des Entlüftungsventils (8) ausgebildet ist.

4. Lufttrockner nach Anspruch 3, **dadurch gekennzeichnet, dass** der in einer Wand (40) des Ventilgehäuses (19) des Entlüftungsventils (8) ausgebildete Druckluftkanal (42*) durch eine nach radial außen offene Nut (44) gebildet ist.

## Claims

1. Air dryer (2) for a compressed-air system, having a dryer cartridge (6) and a vent valve (8), which are connected to one another via an associated distributor housing (10), wherein the distributor housing (10) has a first port (14), which is able to be connected to a compressor, and has at least one second port (16), which is able to be connected to the compressed-air system, and also has an internal duct system via which, in a conveying mode, compressed air is conducted from the first port (14) to the second port (16) via the dryer cartridge (6) and, in a regeneration mode, regeneration air is conducted from the second port (16) via the dryer cartridge (6) and is vented into the surroundings via the opened vent valve (8), **characterized in that** the internal duct system of the distributor housing (10) is formed such that, in the conveying mode, compressed air supplied by the compressor is conducted from the first port (14) via a radially outer region (18) of the vent valve (8) and, from there, is fed to the dryer cartridge (6), wherein the internal duct system is formed such that a valve housing (19) of the vent valve (8) is flowed around radially on the outside by the compressed air, and wherein at least the valve housing (19) of the vent valve (8) is formed from a plastic material.

2. Air dryer according to Claim 1, **characterized in that** the internal duct system of the distributor housing (10) is connected to at least one compressed-air duct (42) which is formed by shaping of the radial outer surface of a wall (40) of the valve housing (19) of the vent valve (8).

3. Air dryer according to Claim 1, **characterized in that** the internal duct system of the distributor housing (10) is connected to at least one compressed-air duct (42*) which is formed in a wall (40) of the valve housing (19) of the vent valve (8).

4. Air dryer according to Claim 3, **characterized in that** the compressed-air duct (42*) formed in a wall (40) of the valve housing (19) of the vent valve (8) is formed by a radially outwardly open groove (44).

## Revendications

1. Dessiccateur d'air (2) pour une installation d'air comprimé, présentant une cartouche de dessiccateur (6) et une soupape de désaérage (8), qui sont en liaison l'une avec l'autre par le biais d'un boîtier de distributeur associé (10), le boîtier de distributeur (10) présentant un premier raccord (14) pouvant être raccordé à un compresseur et au moins un deuxième raccord (16) pouvant être raccordé à l'installation d'air comprimé ainsi qu'en outre un système de canal interne par le biais duquel, dans un mode de refoulement, de l'air comprimé est guidé du premier raccord (14) par le biais de la cartouche de dessiccateur (6) jusqu'au deuxième raccord (16), et dans un mode de régénération, de l'air de régénération est guidé depuis le deuxième raccord (16) par le biais de la cartouche de dessiccateur (6) et est évacué dans l'atmosphère par le biais de la soupape de désaérage ouverte (8), **caractérisé en ce que** le système de canal interne du boîtier de distributeur (10) est réalisé de telle sorte qu'en mode de refoulement, l'air comprimé fourni par le compresseur soit guidé depuis le premier raccord (14) par le biais d'une région radialement extérieure (18) de la soupape de désaérage (8) et soit acheminé de là à la cartouche de dessiccateur (6), le système de canal interne étant réalisé de telle sorte qu'un boîtier de soupape (19) de la soupape de désaérage (8) soit rincé radialement à l'extérieur par l'air comprimé, et au moins le boîtier de soupape (19) de la soupape de désaérage (8) étant formé d'un matériau en plastique.

2. Dessiccateur d'air selon la revendication 1, **caractérisé en ce que** le système de canal interne du boîtier de distributeur (10) est en liaison avec au moins un canal d'air comprimé (42) qui est réalisé par déformation de la surface extérieure radiale d'une paroi (40) du boîtier de soupape (19) de la soupape de désaérage (8).

3. Dessiccateur d'air selon la revendication 1, **caractérisé en ce que** le système de canal interne du boîtier de distributeur (10) est en liaison avec au moins un canal d'air comprimé (42*) qui est réalisé dans une paroi (40) du boîtier de soupape (19) de la soupape de désaérage (8).

4. Dessiccateur d'air selon la revendication 3, **caractérisé en ce que** le canal d'air comprimé (42*) réalisé dans une paroi (40) du boîtier de soupape (19) de la soupape de désaérage (8) est formé par une rainure (44) ouverte radialement vers l'extérieur.
